# EUROPEAN PATENT SPECIFICATION

(11) **EP 4 089 519 B1**
(45) Date of publication and mention of the grant of the patent: **09.07.2025**
(21) Application number: 21173075.9
(22) Date of filing: 10.05.2021
(51) Int. Cl.: G06F 3/14, G09G 5/00

(54) **COMPUTER SYSTEM, REMOTE CONTROL MONITORING SYSTEM, AND REMOTE CONTROL MONITORING METHOD**
COMPUTERSYSTEM, FERNSTEUERUNGÜBERWACHUNGSSYSTEM UND FERNSTEUERUNGÜBERWACHUNGSVERFAHREN
SYSTÈME INFORMATIQUE, SYSTÈME DE SURVEILLANCE DE COMMANDE À DISTANCE ET PROCÉDÉ DE SURVEILLANCE DE COMMANDE A DISTANCE

(43) Date of publication of application: 16.11.2022
(73) Proprietor: NEXCOM International Co., Ltd., New Taipei City 23586 (TW)
(72) Inventor: HUANG, Tsung-Hsi, 23586 Chung-Ho Dist., New Taipei City (TW); KAO, Shih-Fan, 23586 Chung-Ho Dist., New Taipei City (TW); KAO, Chih-Ming, 23586 Chung-Ho Dist., New Taipei City (TW); LEE, Shin-Wei, 23586 Chung-Ho Dist., New Taipei City (TW); CHIU, Yi-Tung, 23586 Chung-Ho Dist., New Taipei City (TW)
(74) Representative: 2K Patentanwälte Blasberg Kewitz & Reichel

(56) References cited:
- EP-A1- 2 804 095
- CN-U- 211 653 609

## Description

### BACKGROUND

### Technical Field

The present invention relates to the technical field of a remote control monitoring, and more particularly to a computer system, a remote control monitoring system, and a remote control monitoring method.

### Description of Related Art

Most of the remote control methods of the related art implement the remote control through software, such as Microsoft Remote Desktop, Team Viewer, or Chrome remote desktop. When the remote control is implemented through software, a local computer (controlled party) must load the operating system and then runs the tool software in the operating system. After this, the remote computer (controlling party) is available to connect to the local computer and execute the remote control on the local computer. For example, the display screen of the local computer can be shown on the remote computer.

EP2804095A1 discloses a system and method for forwarding a graphics command stream. A graphics renderer may receive a graphics command stream where the graphic command stream contains graphical information renderable as a graphical image. The graphics renderer may process the received graphics command stream to generate a processed graphics stream where the processed graphics stream contains equivalent graphical information to the graphical information contained in the graphics command stream. A source redirector may encode the processed graphics stream to generate a formatted graphics stream. A source protocol stack may send the formatted graphics stream to a target graphics component. A target redirector may receive and decode the formatted graphics stream. The target redirector may process the decoded formatted graphics stream to generate a target graphics command stream where the target command stream contains equivalent graphical information contained in the formatted graphics stream.
CN211653609U discloses a 4K distributed KVM agent system, and belongs to the field of KVM over IP equipment. The system comprises an input device and an output device, and input and output can be freely switched through an IP. The input equipment is connected with audio, video and usb signals of the corresponding host, and then is accessed to a local area network through an optical fiber or a network cable; wherein the output end is connected with the display, the audio device and the mouse keyboard are connected with the input device into the same local area network through an optical fiber or a network cable so as to remotely control a host connected with any input device; the device is compatible with hdmi1.4 and usb2.0, has built-in automatic encoding and decoding matching and automatic network matching functions, and supports high-definition digital audio and video and usb signal transmission. Different signal source hosts can be controlled across the screen after one-time setting, so that the working efficiency is improved; the input device can transmit two paths of 4K signal pictures, is provided with a loop output interface, and can monitor display content locally; the output device can output in two ways at the same time, is internally provided with an embedded software interface and can be matched with the distributed output device to achieve on-screen operation.

Since the above remote control methods are executed only in the operating system, the above remote control methods are only allowed to execute In-Band control, and the access authorities thereof are strict restricted by the operating system. This is inconvenient to users. For example, the display screen of the local computer may not be obtained when the local computer is shut down, or the operating system is not loaded.

Accordingly, there is currently a need for an Out-Of- Band remote mirror display schema to solve the above-mentioned problems.

### SUMMARY OF THE PRESENT INVENTION

It is an object of the present invention to provide a computer system, a remote control monitoring system, and a remote control monitoring method having an ability to obtain the video signal directly from the processor for implementing the remote mirror display in a more efficient manner.

This problem is solved by a remote control monitoring system, a computer system, and a remote control monitoring method as claimed by claims 1, 9 and 10. Further advantageous embodiments are the subject-matter of the dependent claims.

The present invention may retrieve the video signal directly from the processor to prevent the strict restrictions of access authorities from the operating system, and the out-of-band remote mirror display is implemented.

### BRIEF DESCRIPTION OF THE DRAWINGS

The features of the present invention are believed to be novel are set forth with particularity in the appended claims. The present invention itself, however, may be best understood by reference to the following detailed description of the present invention which describes an exemplary embodiment of the present invention, taken in conjunction with the accompanying drawings, in which:
Fig. 1 illustrates an architecture diagram of the remote monitoring system;
Fig. 2 illustrates an architecture diagram of another remote control system;
Fig. 3 illustrates an architecture diagram of the computer system of one embodiment of the present invention;
Fig. 4 illustrates an architecture diagram of the video components of one embodiment of the present invention;
Fig. 5 illustrates an architecture diagram of the video components of one embodiment of the present invention;
Fig. 6 illustrates an architecture diagram of the computer system of one embodiment of the present invention;
Fig. 7 illustrates an architecture diagram of the signal receiver of one embodiment of the present invention;
Fig. 8 illustrates an architecture diagram of the remote controller of one embodiment of the present invention;
Fig. 9 illustrates a flowchart of the remote control monitoring method of one embodiment of the present invention;
Fig. 10 illustrates an architecture diagram and a flowchart of the remote control monitoring method of one embodiment of the present invention;
Fig. 11 illustrates a partial flowchart of the remote control monitoring method of one embodiment of the present invention;
Fig. 12 illustrates an architecture diagram of the computer system of one embodiment of the present invention; and
Fig. 13 illustrates an architecture diagram of the signal receiver of one embodiment of the present invention.

### DETAILED DESCRIPTION

The technical contents of this invention will become apparent with the detailed description of embodiments accompanied with the illustration of related drawings as follows. It is intended that the embodiments and drawings disclosed herein are to be considered illustrative rather than restrictive.

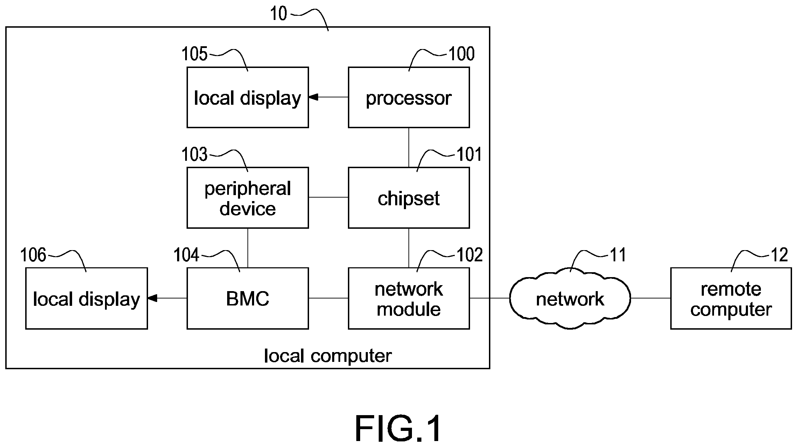

Please refer to Fig. 1, Fig. 1 illustrates an architecture diagram of the remote monitoring system. In the remote monitoring system, a Baseboard Management Controller (BMC) 104 is arranged in a local computer 10.

The BMC 104 is connected to the network module 102, and is used to implement the Out-Of-Band management of the local computer 10. For example, a remote computer 12 may control the local computer 10 to be booted, shut down, or obtain status information of peripheral device 103 or chipset 101 through the network 11 and the BMC 104. The remote computer 12 may further control the peripheral device 103 or the chipset 101 of the local computer 10 through the network 11 and the BMC 104.

However, under the architecture of this remote monitoring system, due to the restrictions of access authorities, the BMC 104 is unable to directly receive the video signal (namely, the display screens of the local display 105) generated by the processor, and is unable to implement the remote mirror display. Namely, the BMC 104 does not have the ability to provide the display screens of the local display 105 to the remote computer 12 for mirror display. Besides, the BMC 104 may be further connected to another local display 106, and display the related information on the local display 106.

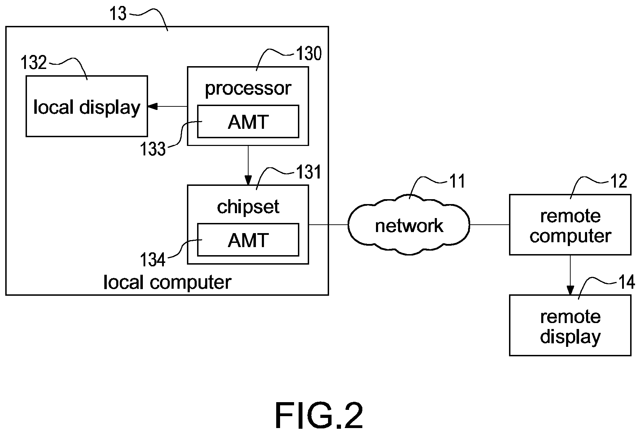

Please refer to Fig. 2, Fig. 2 illustrates an architecture diagram of another remote control system. The remote control system uses the Intel Active Management Technology (AMT) provided by Intel^{®} to implement the remote mirror display.

More specifically, inside the local computer 13, AMT 133 is deployed inside the processor 130, and the AMT 134 is deployed inside the chipset 134. AMT 133 of the processor 130 has the ability to transmit the display screens (video signal) to the local display 132 for displaying. Besides, AMT 133 has the ability to transmit the same display screens to the AMT 134 of the chipset 131, and transmit the display screens to the remote computer 12 through the chipset 131 (connected to the above-mentioned network module 102) and network 11, so as to display the mirror display screens of the local display 132 on the remote display 14 and achieve the remote mirror display.

However, the AMT function is deployed only inside the Intel^{®} high-level processor, and must collocate with designated Intel^{®} chips, such that the cost of remote mirror display is high. Namely, the disadvantages of the AMT function are significantly increasing hardware costs and significantly reducing the deployment flexibility of hardware. Moreover, the above-mentioned AMT 133 and AMT 134 are like a black box that no internal architecture is allowed to be inspected. The general deployers are unable to know the specific structure of AMT, and unable to modify or customize the AMT.

To solve the above-mentioned problems, the present invention discloses a computer system, a remote control monitoring system, and a remote control monitoring method with remote control monitoring function, the computer system, the remote control monitoring system, and the remote control monitoring method may achieve the Out-Of-Band management and remote mirror display. A detailed explaining is below.

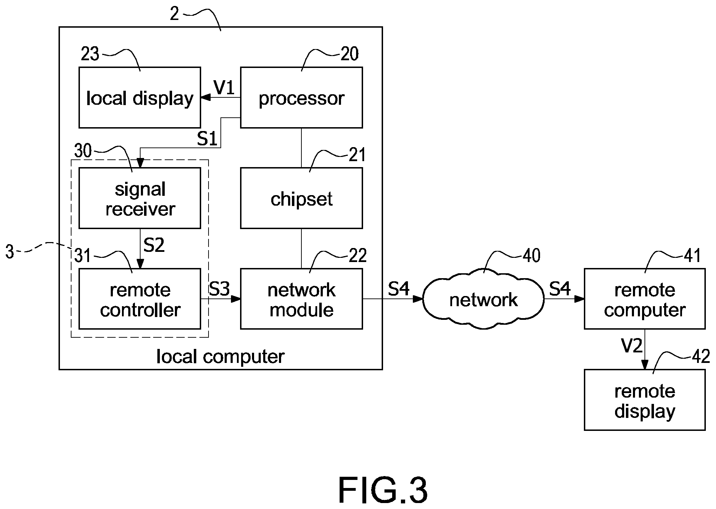

Please refer to Fig. 3, Fig. 3 illustrates an architecture diagram of the computer system of one embodiment of the present invention. The computer system (hereinafter as local computer 2) with remote control monitoring function of the present invention, such as desktop computer, laptop, workstation, server, etc., mainly includes a processor 20, a chipset 21, a network module 22, a local display 23, and a remote control monitoring system 3.

The processor 20, such as CPU (Central Processing Unit), is used to execute the main computation (or calculation) and control. The chipset 21 is electrically connected to the processor 20 and the other devices, such as the network module 21 or the peripheral devices 24 recited below, and used to be controlled by the processor 20 to drive the other devices. The network module 22, such as Ethernet card, Wi-Fi network card, cellular network module, or the other network modules with networking capability, is used to connect to the network 40 (such as the Internet), and communicate with the remote computer 41 through the network 40. The local display 32, such as touchscreen, LCD screen, projector, plasma screen or the other types of displays, is used to display information.

The remote control monitoring system 3 is mainly used to instantly (in real-time) provide the local display screens (namely, the display screen of the local display 23) of the local computer 2 to the remote computer 41, such as the desktop computer, laptop, workstation, server, etc., for remote real-time display.

More specifically, the remote control monitoring system 3 includes a signal receiver 30 and a remote controller 31. The signal receiver 30 may be obtained by modifying the display adapter. The signal receiver 30 is directly connected to the processor 20, and is able to receive the video signal corresponding to the local display screens from the processor 20. The remote controller 31 may be obtained by modifying the BMC or the single-chip controller. The remote controller 31 is used to transmit the received video signal to the remote computer 41 to achieve the remote mirror display.

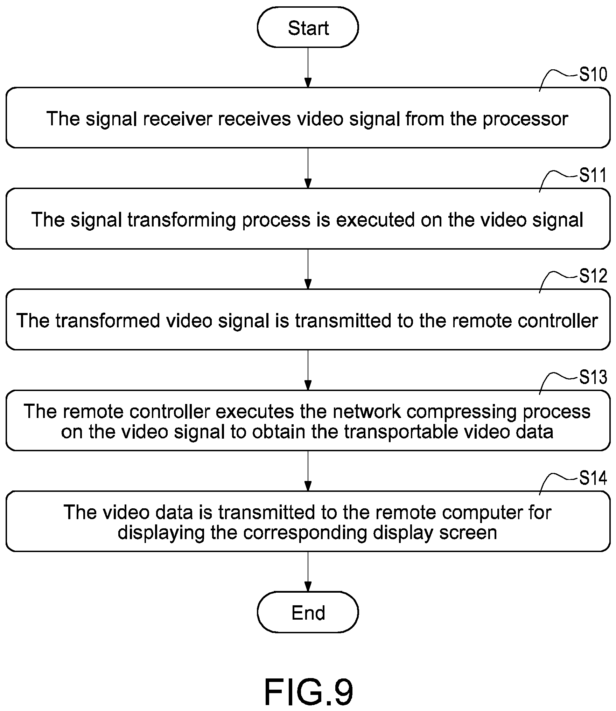

More specifically, please also refer to Fig. 9, Fig. 9 illustrates a flowchart of the remote control monitoring method of one embodiment of the present invention.

In this exemplary embodiment, when the local computer 2 is operated (such as booting is done), the processor 20 continuously transmits the video signal V1 to the local display 23 to display the local display screens on the local display 23.

Moreover, when the remote mirror display is started, the step S10 is executed, the processor 20 provides the video signal compatible with a first standard (namely, the first video signal S1, such as DisplayPort standard or the other output standard supported by processor 20), and the signal receiver 30 continuously receives the first video signal S1 from the processor 20.

Then, the step S11 is executed, since the remote controller 31 is usually configured to be unable to access the output standard (first standard) of the processor 20, in the present invention, the signal receiver 30 is configured to execute a signal transforming process (such as the video standard transformation) on the first video signal S1 to convert the first standard of the first video signal S1 into the input standard (the second standard, such as HDMI standard, VGA standard, DVI standard, TTL standard, LVDS standard, CVBS standard, S-Video standard, YPbPr standard, etc.) supported by the remote controller 31. Thus, the second video signal S2 in a different standard from the first standard can be obtained.

Then, the step S12 is executed, the signal receiver 30 transmits the second video signal S2 to the remote controller 31.

Next, the step S13 is executed, since the general video standards are unable to be transmitted through the network, in the present invention, the remote controller 31 executes a network compressing process (such as the streaming transformation) on the second video signal S2 to generate the video data S3 compatible to a network-transportable standard, such as Real Time Streaming Protocol (RTSP).

Next, the step S14 is executed, the remote controller 13 transmits the generated video data S3 to the network module 22, the network module 22 transforms the video data S3 into the network-transportable video data S4, such as data packets, and transmits the video data S4 through the network 40 to the remote computer 41. The remote computer 41 may execute a decoding process which may include the decapsulation, the video standard conversion, etc., on the received video data S4 to obtain the video signal V2, and transmit the video signal V2 to the remote display 42. Thus, the remote display 42 is able to display the remote display screens corresponding to the local display screens.

In one of the exemplary embodiments, the remote display screens are the mirror screens of the local display screens. In other words, the remote display screens have the same framework, typesetting, and displayed content as the local display screens, but the remote display screens shown on the remote display 42 may be configured to different display parameters, such as resolution or aspect ratio, from the local display screens shown on the local display 23.

In one of the exemplary embodiments, a part of each remote display screen may render a display window, this display window is used to show each received local display screen, and another part (display zones) of each remote display screen may be still used to perform the operation to the remote computer 41 or display the information of the remote computer 41.

The present invention is able to obtain the video signal directly from the processor 20 to prevent the strict restrictions of access authorities from the operating system, and the out-of-band remote mirror display may be implemented. For example, when the present invention is used, the out-of-band remote mirror display, such as the BIOS configuration screen, operating system selection screen, etc., may be achieved.

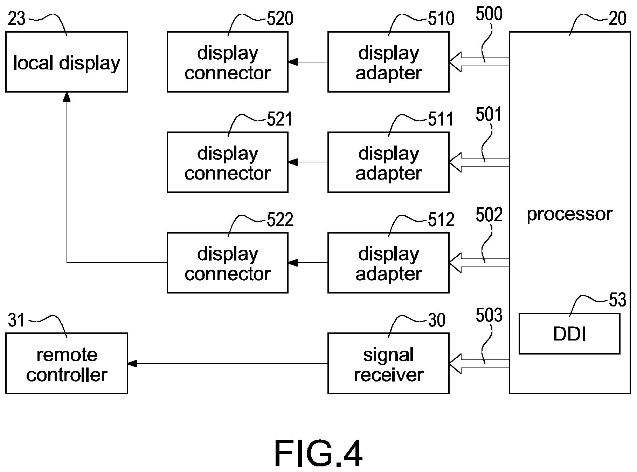

Please refer to Fig. 4, Fig. 4 illustrates an architecture diagram of the video components of one embodiment of the present invention. Figure 4 is used to exemplarily explain how the signal receiver 30 of the present invention receives the above-mentioned first video signal S1 directly from the processor 20.

In this example, the processor 20 includes a DDI 53, the DDI 53 is a module to implement the Data Direct Input (DDI) technology. A main purpose of DDI is to make the processor 20 be able to output the video signal directly to the other device (figure 4 uses the display adapters 510-512 and the signal receiver 30 for example) without transmitting through the main memory (such as RAM), so as to achieve high-speed signal transmission.

In this example, the processor 20 includes four video signal ports 500-503, each of the video signal ports 500-503 is configured to output the video signal compatible with the above-mentioned first standard. For example, the video signal ports may be the signal output ports of DisplayPort, and the number of the video signal ports may be modified arbitrarily.

The video signal ports 500-502 are respectively connected to the display adapters 510-512, each display adapter 510-512 are respectively connected to the corresponding display connectors 520-522. Each display adapter 510-512 is used to transform the video signal of the first standard into the video standard supported by the connected display connector 520-522.

For example, the display adapter 512 is configured to transform the video signal from the DisplayPort standard into the HDMI standard, and transmit the HDMI video signal to the display connector 522, such as HDMI connector. Then, the display connector 522 transmits the HDMI video signal to the local display 23 for displaying.

In the present invention, one video signal port 503 of the processor 20 is modified to be connected to the signal receiver 30, and the video signal ports 502 and 503 are configured to a mirror display mode. Namely, the video signal outputted by the video signal port 502 is the same as the video signal outputted by the video signal port 503. Thus, the signal receiver 30 may directly receive the mirror video signal through the DDI 53 from the processor 20, execute the signal standard transformation, and provide the transformed video signal through the remote controller 31 and network 40 to the remote computer 41 for displaying.

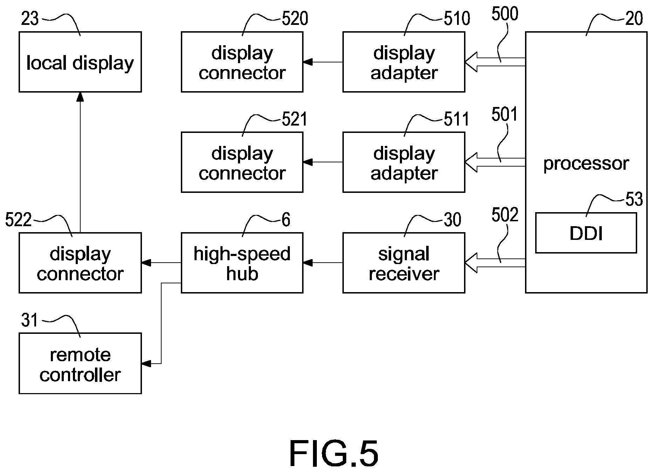

Please refer to Fig. 5, Fig. 5 illustrates an architecture diagram of the video components of one embodiment of the present invention. In the example shown in figure 5, the remote control monitoring system may include a high-speed hub 6. The high-speed hub 6 may include one or more input interfaces and multiple output interfaces.

When the display connector 522 and the remote controller 31 are compatible with the same video standard (such as HDMI standard or VGA standard), the present invention may directly connect single channel (the signal video signal port 502) separately into multiple channels (the local display 23 and the remote controller 31), so as to omit the configuration related to the above-mentioned mirror display mode.

More specifically, in the present invention, the video signal port 502 is connected to the signal receiver 30, one input interface of the high-speed hub 6 is connected to the signal receiver 30, and two output interfaces of the high-speed hub 6 are respectively connected to the display connector 522 (connected to the local display 23) and the remote controller 31. Thus, the first video signal in the first standard provided by the processor 20 is inputted to the signal receiver 30 through the video signal port 502, the signal receiver 30 transforms the first video signal in the first standard into the second video signal in the second standard (such as HDMI standard or VGA standard). Then the second video signal is inputted to the high-speed hub 6, and broadcasted to the display connector 522 and the remote controller 31. Thus, the local display 22 is able to show the local display screens, and the remote display 42 is able to show the mirror remote display screens.

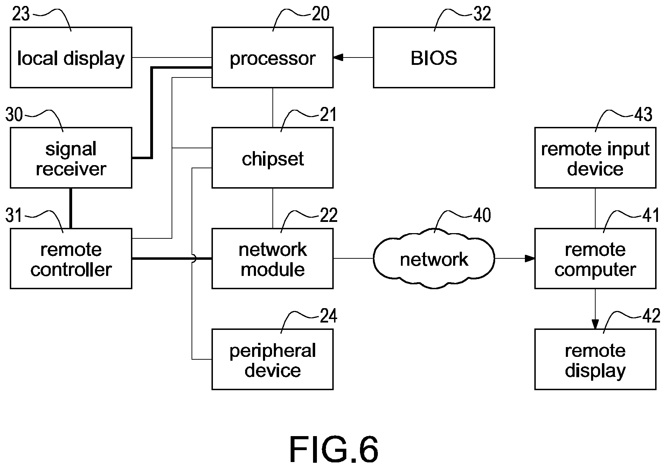

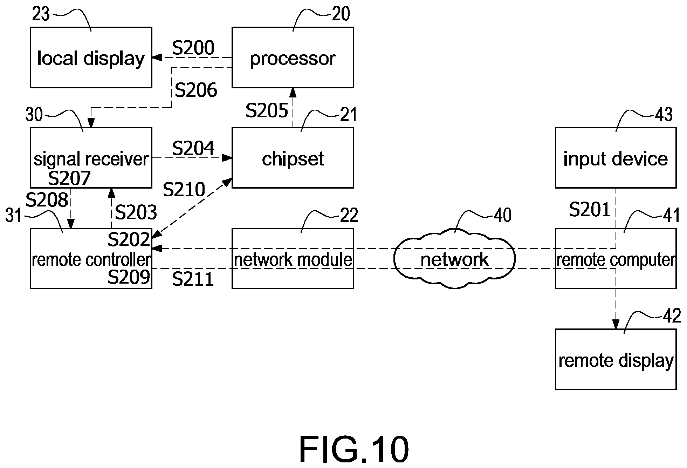

Please refer to Fig. 6 and Fig. 10 simultaneously, Fig. 6 illustrates an architecture diagram of the computer system of one embodiment of the present invention, and Fig. 10 illustrates an architecture diagram and a flowchart of the remote control monitoring method of one embodiment of the present invention.

In this example, the local computer 2 may include one or more peripheral devices 24, such as a cooling fan device, power supply, hard disk, keyboard, mouse, etc. Each peripheral device 24 is connected to the chipset 21 for being locally monitored and controlled. Each peripheral device 24 may be further connected to the remote controller 31 (not shown in the figures) for being remotely monitored and controlled. The remote controller 31 is connected to the chipset 21 and the processor 20.

The remote control monitoring may include the Basic Input/Output System (BIOS) 32. The BIOS 32 is installed in the local computer 2 (such as being installed in the EEPROM). The BIOS 32 is loaded and executed after the local computer 2 is booted, so as to execute the hardware initialization of the local computer 2.

In one of the exemplary embodiments, when the local computer 2 loads and executes the BIOS 32, the BIOS 32 may set the first video signal port (such as the video signal port 502 as shown in figure 4) and the second video signal port (such as the video signal port 503 as shown in figure 4) connected to the processor 20 to be a mirror display mode to make the two video signal ports be configured to transmit the same first video signal.

The execution flow of the remote control monitoring method of this embodiment is below.

In the step S200, the processor 20 continuously transmits the video signal of the local display screens to the local display 23 for displaying after being booted.

When the remote mirror display is executed, the step S201 is executed, the remote user may operate the input device 43 of the remote computer 41 to send a remote switch request through the network 40 to the remote controller 31. The above-mentioned remote switch request may include the login data, such as any combination of the account name, password, IP address of remote computer 41, MAC address of remote computer 41, and the other verifiable information.

In the step S202, the remote controller 31 may execute an authentication on the login data of the remote switch request after the remote switch request is received. For example, the remote controller 31 may determine whether the login data is consistent with the predefined registration data.

In one of the exemplary embodiments, the remote computer 41 may further send an operation command or a check request of the peripheral device 24 to the remote controller 31, the remote controller 31 may execute the corresponding control (such as direct controlling or controlling through the chipset 21) based on these requests. For example, the remote controller 31 may control the peripheral device 24 based on the operation command, or return the status information of the peripheral device 24 as the step S210.

For example, the operation command may be the mouse input operation and/or the keyboard input operation from the remote end to the local end. The remote computer 41 may control the local end to trigger the corresponding mouse event and/or the corresponding keyboard event based on the control request.

In the step S203, the remote controller 31 transmits an enabling display notification to the signal receiver 30 after the remote switch request is verified.

In the step S204, the signal receiver 30 may be connected to the chipset 21, such as the pins of General-purpose input/output (GPIO), and transmit the enabling display notification to the chipset 21.

In the step S205, the chipset 21 notifies the processor 20 to enable the video signal port (such as the video signal port 503 shown in figure 4) connected to the signal receiver 30.

In the step S206, the processor 20 starts to transmit the first video signal corresponding to the local display screens to the signal receiver 30.

In the step S207, the signal receiver 30 transforms the first video signal into the second video signal supported by the remote controller 31.

In the step S208, the signal receiver 30 inputs the second video signal to the remote controller 31.

In the step S209, the remote controller 31 transforms the second video signal into the network-transportable video data.

In one of the exemplary embodiments, step S210, the remote controller 31 may obtain the status information of the components, such as the peripheral device 24, the network module 22, the devices connected to the chipset 21, etc., of the local computer 2 by the chipset 21 or direct connection, and transmit the obtained status information to the remote computer 41.

In the step S211, the remote controller 31 transmits the video data through the network module 22 to the remote computer 41, the remote computer 41 processes the video data and starts to display the remote display screens mirroring the local display screens on the remote display 42.

Thus, the present invention may make the remote display 42 be switched to display the local display screens, make the remote input devices 43 be able to control the local computer 2, and achieve the remote KVM switch function.

Please be noted that the present invention may further provide a display screen refresh function and a disconnection control function during the execution of remote mirror display.

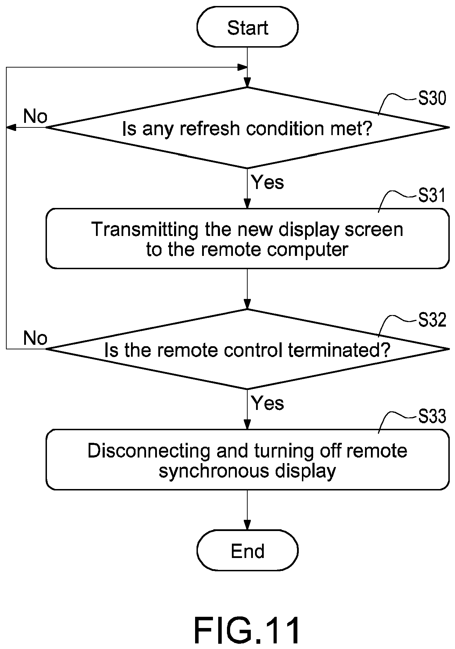

More specifically, please refer to Fig. 11, Fig. 11 illustrates a partial flowchart of the remote control monitoring method of one embodiment of the present invention.

In the step S30, during executing the remote mirror display, at least one of the signal receiver 30, the remote controller 31, and the processor 20 continuously detects whether a preset refresh condition is met. The refresh condition may include the local display screen being changed or a preset time interval (such as 1/30 seconds) being elapsed.

In the step S31, the signal receiver 30 (and the remote controller 31) executes the above-mentioned steps S10-S14 (or the steps S206-S211) again to obtain the new (current) first video signal the new (current) local display screens from the processor 20, executes the signal transforming process on the new first video signal to generate the new second video signal, executes the network compressing process on the new second video signal to generate the new video data, and transmits the new video data through the network module 22 to the remote computer 41. Then, the remote display 42 refreshes its screen to display the new remote display screens corresponding to new local display screens.

Thus, the present invention may achieve the display screen refresh function of remote display screen.

In the step S32, at least one of the signal receiver 30 and the remote controller 31 detects whether the remote control is terminated (discontinued), such as the remote user disconnects the connection, or connection timed out, etc.

In the step S32, when termination of the remote control is detected, the remote controller 31 sends a disabling display notification through the signal receiver 30 to the chipset 21, and the chipset 20 notifies the processor 20 to stop providing the first video signal to the signal receiver 31 to stop providing the mirror display screens.

Please be noted that, when the remote mirror display is started, the processor 20 may configure the video signal port 503 (as shown in figure 4) connected to the signal receiver 30 to be "display connected". In other words, the local user may watch through the local computer 2 that the local computer is connected to two displays simultaneously, one is the local display 23, another is the remote display 42.

If the connection between the remote controller 31 and the remote computer 41 is disconnected without changing the above configuration of the video signal port 503, the local user continuously sees that the local computer 2 is connected to two displays even if the remote control is terminated. This situation may cause confusion to the local user.

In this regard, the present invention notifies the processor 20 to stop proving the video signal to the signal receiver 31 through the chipset 21 when the remote control is terminated. The above feature enables the processor 20 to automatically configure the video signal port 502 (as shown in figure 4) connected to the signal receiver 30 to be "display removed" after the termination of the remote mirror display. The local user may see that the local computer 2 is connected to only one display (local display 23), and the confusion to the local user is avoided. The present invention can improve the user experience.

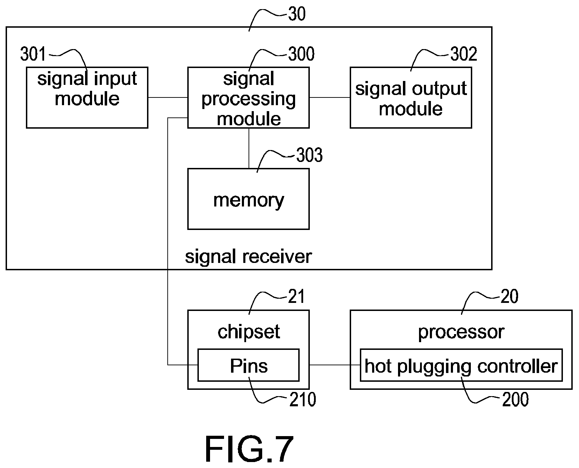

Please refer to Fig. 7, Fig. 7 illustrates an architecture diagram of the signal receiver of one embodiment of the present invention. In this exemplary embodiment, the signal receiver 30 may include a signal input module 301, a signal output module 302, a memory 303, and a signal processing module 300 electronically connected to the above components.

The signal input module 301, such as DisplayPort signal input, is used to receive the first video signal. The signal output module 302, such as TTL 24 bits signal output, is used to output the transformed second video signal. The memory 303, such as flash memory or cache memory, is used to store data. The signal processing module 303 is used to execute the above-mentioned signal transforming process.

In one of the exemplary embodiments, the signal processing module 300 is connected to a set of pins 210, such as GPIO pins, of the chipset 21, and executes the signal transmission with a hot plugging controller 200 of the processor 20. By the above architecture, the signal processing module 300 may control the processor 20 to change the status of the video signal port 503 (shown in figure 4), such as configuring the video signal port 503 to be "display connected" or "display removed". The signal processing module 300 may control the processor 20 to start to provide the first video signal and/or stop providing the first video signal.

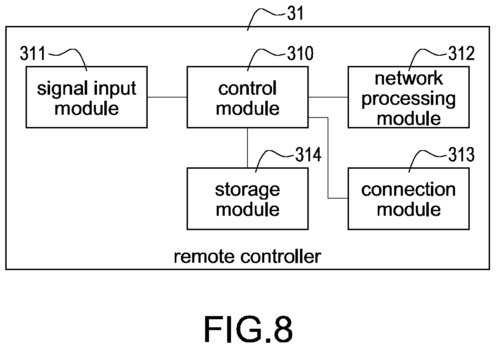

Please refer to Fig. 8, Fig. 8 illustrates an architecture diagram of the remote controller of one embodiment of the present invention. In this exemplary embodiment, the remote controller 31 may include a signal input module 311, a network processing module 312, a connection module 313, a storage module 314, and a control module 310 electrically connected to the above components.

The signal input module 311, such as TTL 24 bits signal output, is used to receive the second video signal. The network processing module 312 is used to execute the above-mentioned network compressing process. The storage module 314, such as flash memory or cache memory, is used to store data. The control module 310 is used to execute the above-mentioned remote monitoring and control function.

In one of the exemplary embodiments, the remote controller 31 may be obtained by modifying the BMC, such as AST2400, AST2500, AST 2600 of ASPEED^{®} or the other System on Chip (SoC). More specifically, the BMC may include signal output module (such as TTL 24bits signal output), the present invention may modify this signal output module to connect to the signal receiver 30 as the signal input module.

The present invention may be implemented by modifying the existing chips, thereby the present invention may significantly save the cost to developed and produce the new functional chips.

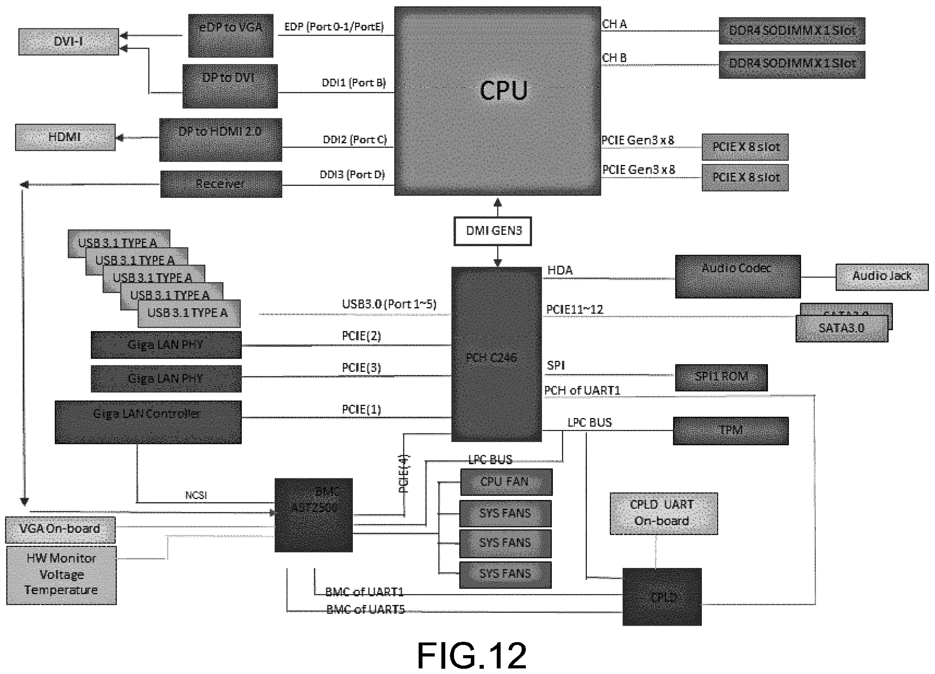

Fig. 12 illustrates an architecture diagram of the computer system of one embodiment of the present invention. Fig. 12 is used to exemplary explain one implementable example of the computer system with the remote control monitoring function of the present invention, but this specific example is not intended to limit the applicable architectures of the present disclosed example.

Hereafter only describes the changes between this embodiment and previous embodiments of the present invention. In this example, the chipset may be the chipset of PCH C246. The processor 20 (CPU) is connected to the signal receiver 30 (receiver) through the video signal port DDI 3(Port D). The remote controller 31 may be the BMC of AST2500, and is connected to the network module (Giga LAN Controller) through the Network Controller Sideband Interface (NCSI). The remote controller 31 may further be connected to the chipset 21 through the PCIE (4).

Thus, the remote controller 31 and the signal receiver 30 are able to achieve the remote mirror display.

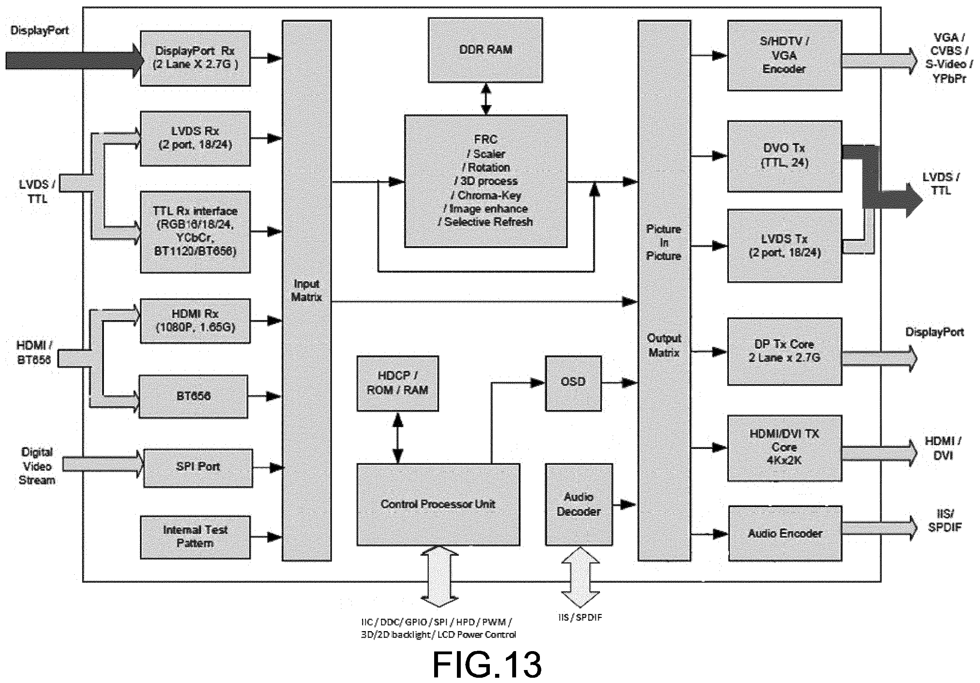

Fig. 13 illustrates an architecture diagram of the signal receiver of one embodiment of the present invention. Fig. 13 is used to exemplary explain one implementable example of the signal receiver 30 of the present invention, but this specific example is not intended to limit the applicable architectures of the signal receiver 30 of the present disclosed example.

In this example, the signal receiver 30 may be obtained by modifying the display adapter chip, such as the CH7038 chip, but this specific example is not intended to limit the applicable signal receiver of the present disclosed example.

More specifically, as shown in figure 13, the display adapter may include multiple types of input interfaces, multiple types of output interfaces, and the other signal control. The input interfaces may include any combination of DisplayPort, LVDS/TTL, HDMI/BT656, Digital Video Stream, etc. The output interfaces may include any combination of VGA/CVBS/S-Video/YPbPr, LVDS/TTL, DisplayPort, HDMI/DVI, IIS/SPDIF, etc. The signal control may be any combination of the below Control Processor Unit, Audio Decoder, etc. The present invention refers to the above-mentioned first standard and the second standard to keep the required input interface (such as DisplayPort as the first standard) and the required output interface (such as TTL as the second standard) and the related signal processing circuits (such as the central DDR RAM and the controller connected to the DDR RAM) enabling, and disable all or most of the remaining input interfaces, output interfaces, and signal control.

Due to the present invention can be implemented by modifying the existing chips, the present invention may significantly save the cost to developed and produce the new functional chips.

## Claims

1. A remote control monitoring system (3), used to provide a local display screen to a remote computer (41) in real-time to implement a remote real-time display, the remote control monitoring system (3) comprising:
**characterized in that**:
a display adapter (512), connected to a local display (23);
a processor (20), comprising a first video signal port (502) and a second video signal port (503), wherein the first video signal port (502) is connected to the display adapter (512);
a signal receiver (30), comprising multiple types of input interfaces for a first video standard and multiple types of output interfaces for a second video standard, wherein the signal receiver (30) is connected to the second video signal port (503) of the processor (20) of a local computer (2) and configured to receive a first video signal corresponding to the local display screen from the second video signal port (503) through one type of the inputted interfaces, convert the first video signal to a second video signal, and enable one type of the output interfaces to output the second video signal in a video standard different from the video standard of the first video signal; wherein the first video signal port (502) and the second video signal port (503) are set to be a mirror display mode to transmit the first video signal of same content; and
a remote controller (31), connected to the signal receiver (30) and configured to transmit the second video signal through a network module (22) to the remote computer (41), such that a remote display screen corresponding to the local display screen is displayed based on the second video signal;
wherein the first video signal is compatible with an output standard of the processor (20); the second video signal is compatible with an input standard of the remote controller (31).

2. The remote control monitoring system (3) according to claim 1, wherein the remote controller (31) is connected to the network module (22) by a network controller sideband interface (NCSI).

3. The remote control monitoring system (3) according to any of the preceding claims, wherein the remote controller (31) is connected to a chipset (21) and connected to a plurality of peripheral devices (24) of the local computer (2) through the chipset (21), the remote controller (31) is configured to retrieve a status information of each peripheral device (24) through the chipset (21) and transmit the status information to the remote computer (41), or control the peripheral device (24) corresponding to an operation command through the chipset (21) based on the operation command sent from the remote computer (41).

4. The remote control monitoring system (3) according to any of the preceding claims, wherein the signal receiver (30) is connected to a chipset (21) of the local computer (2);
wherein the remote controller (31) is configured to send an enabling display notification through the signal receiver (30) to the chipset (21) when receiving a remote switch request from the remote computer (41), such that the processor (20) provides the first video signal to the signal receiver (30).

5. The remote control monitoring system (3) according to any of the preceding claims,
wherein when a remote control is terminated, the remote controller (31) is configured to send a disabling display notification to a/the chipset (21), such that the chipset (21) notifies the processor (20) to stop providing the first video signal to the signal receiver (30) by a hot plugging controller (200).

6. The remote control monitoring system (3) according to any of the preceding claims, wherein the signal receiver (30) is configured to receive a new first video signal corresponding to a new local display screen from the processor (20) when the signal receiver (30) determines that a refresh condition is met, and execute a video standard transformation on the new first video signal to generate a new second video signal;
the remote controller (31) is configured to execute a streaming transformation on the new second video signal to generate a new video data when the refresh condition is met, and transmit the new video data through the network module (22) to the remote computer (41) to display a new remote display screen corresponding to the new local display screen.

7. The remote control monitoring system (3) according to any of the preceding claims, further comprising: a basic input/output system (BIOS) (32), wherein the BIOS (32) is configured to set the first video signal port (500-503) and the second video signal port (500-503) connected to the processor (20) to be the mirror display mode when the BIOS (32) is installed in the local computer (2) and loaded for execution during the local computer (2) is booting.

8. The remote control monitoring system (3) according to any of the preceding claims, further comprising: a high-speed hub (6), wherein the high-speed hub (6) comprises at least one input interface and a plurality of output interfaces, the input interface is connected to the signal receiver (30), two of the output interfaces are respectively connected to the remote controller (31) and a display connector (520-522) of the local computer (2);
wherein the high-speed hub (6) is configured to broadcast the second video signal received from the signal receiver (30) to the remote controller (31) and the display connector (520-522).

9. A computer system with a remote control monitoring function comprising:
**characterized in that**:
the remote control monitoring system (3) according to any of the preceding claims;
the network module (22), connected to the remote control monitoring system (3), and configured to connect the remote computer (41) through network (40), and transmit a video data received from the remote control monitoring system (3) to the remote computer (41); and
the local display (23), configured to display the local display screen.

10. A remote control monitoring method, used to provide a local display screen generated by a local computer (2) to a remote computer (41) in real-time to implement a remote real-time display, the local computer (2) comprising a signal receiver (30), a remote controller (31), a processor (20), a network module (22), a local display (23), and a display adapter (512), the remote control monitoring method comprising following steps:
**characterized in that**:
a) transmitting, through a first video signal port (502) of the processor (20), a first video signal to the display adapter (512) connected to the local display (23), wherein the processor (20) comprises the first video signal port (502) connected to the display adapter (512) and a second video signal port (503) connected to the signal receiver (30), and the first video signal port (502) and the second video signal port (503) are set to be a mirror display mode to transmit the first video signal of same content;
b) by the signal receiver (30), receiving the first video signal corresponding to the local display screen through one type of input interfaces of the signal receiver (30) from the second video signal port (503) of the processor (20), converting the first video signal to a second video signal, and outputting the second video signal in a video standard different from the video standard of the first video signal through one type of the output interfaces of the signal receiver (30);
c) transmitting, by the remote controller (31), the second video signal through the network module (22) to the remote computer (41); and
d) displaying a remote display screen mirroring the local display screen on a remote display (42) based on the second video signal.

11. The remote control monitoring method according to any of the claims 10, further comprising following steps:
e1) by the remote controller (31), retrieving a status information of a peripheral device (24) through a chipset (21) and transmitting the status information to the remote computer (41); and
e2) controlling the peripheral device (24) corresponding to an operation command through the chipset (21) based on the operation command sent from the remote computer (41).

12. The remote control monitoring method according to any of the preceding claims, further comprising following steps before the step a):
f1) by the remote controller (31), sending an enabling display notification through the signal receiver (30) to a/the chipset (21) when a remote switch request from the remote computer (41) is received; and
f2) by the chipset (21), notifying a hot plugging controller (200) of the processor (20) to make the processor (20) provide the first video signal to the signal receiver (30).

13. The remote control monitoring method according to any of the preceding claims, further comprising following step before the step f1):
g) by the remote controller (31), receiving a login data through the network module (22) from the remote computer (41), and executing an authentication on the login data;
wherein the step f1) comprises receiving the remote switch request when the login data is verified.
wherein the remote control monitoring method comprises the following steps:
h1) by the remote controller (31), sending a disabling display notification through the signal receiver (30) to the chipset (21) when a remote control being terminated is detected; and
h2) by the chipset (21), notifying the processor (20) to stop providing the first video signal to the signal receiver (30);
wherein the remote control monitoring method comprises a step i), when a refresh condition is met, executing the step b) to the step d) to transmit a new video data to the remote computer (41) to display a new remote display screen corresponding to a new local display screen.

14. The remote control monitoring method according to any of the preceding claims, further comprising following steps before the step a):
j1) loading a basic input/output system (BIOS) (32) when the local computer (2) is booted; and
j2) by the BIOS (32), setting the first video signal port (500-503) and the second video signal port (500-503) connected to the processor (20) to be the mirror display mode.

## Patentansprüche

1. Ein Fernsteuerungsüberwachungssystem (3), das verwendet wird, um einem entfernten Computer (41) in Echtzeit einen lokalen Anzeigebildschirm zur Verfügung zu stellen, um eine entfernte Echtzeitanzeige zu implementieren, wobei das Fernsteuerungsüberwachungssystem (3) umfasst:
**dadurch gekennzeichnet**:
einen Display-Adapter (512), der mit einem lokalen Display (23) verbunden ist;
einen Prozessor (20), der einen ersten Videosignalanschluss (502) und einen zweiten Videosignalanschluss (503) umfasst, wobei der erste Videosignalanschluss (502) mit dem Anzeigeadapter (512) verbunden ist
einen Signalempfänger (30), der mehrere Arten von Eingabeschnittstellen für einen ersten Videostandard und mehrere Arten von Ausgabeschnittstellen für einen zweiten Videostandard umfasst, wobei der Signalempfänger (30) mit dem zweiten Videosignalanschluss (503) des Prozessors (20) eines lokalen Computers (2) verbunden und so konfiguriert ist, dass er ein erstes Videosignal, das dem lokalen Anzeigebildschirm entspricht, von dem zweiten Videosignalanschluss (503) über eine Art der Eingabeschnittstellen empfängt, das erste Videosignal in ein zweites Videosignal umzuwandeln, und einen Typ der Ausgabeschnittstellen zu aktivieren, um das zweite Videosignal in einem Videostandard auszugeben, der sich von dem Videostandard des ersten Videosignals unterscheidet; wobei der erste Videosignalanschluss (502) und der zweite Videosignalanschluss (503) so eingestellt sind, dass sie einen Spiegelanzeigemodus bilden, um das erste Videosignal mit demselben Inhalt zu übertragen; und
eine Fernsteuerung (31), die mit dem Signalempfänger (30) verbunden und so konfiguriert ist, dass sie das zweite Videosignal über ein Netzwerkmodul (22) an den entfernten Computer (41) überträgt, so dass ein Fernen Anzeigebildschirm, der dem lokalen Anzeigebildschirm entspricht, auf der Grundlage des zweiten Videosignals angezeigt wird;
wobei das erste Videosignal mit einem Ausgangsstandard des Prozessors (20) kompatibel ist; das zweite Videosignal ist mit einem Eingangsstandard der Fernsteuerung (31) kompatibel.

2. Das Fernsteuerungsüberwachungssystem (3) nach Anspruch 1, wobei die Fernsteuerung (31) mit dem Netzwerkmodul (22) über eine Netzwerk-Controller-Seitenband-Schnittstelle (NCSI) verbunden ist.

3. Das Fernsteuerungsüberwachungssystem (3) nach einem der vorhergehenden Ansprüche, wobei die Fernsteuerung (31) mit einem Chipsatz (21) verbunden ist und über den Chipsatz (21) mit einer Vielzahl von Peripheriegeräten (24) des lokalen Computers (2) verbunden ist, die Fernsteuerung (31) so konfiguriert ist, dass sie eine Statusinformation jedes Peripheriegeräts (24) über den Chipsatz (21) abruft und die Statusinformation an den Entfernten Computer (41) überträgt, oder das Peripheriegerät (24) entsprechend einem Betriebsbefehl über den Chipsatz (21) auf der Grundlage des vom Entfernten Computer (41) gesendeten Betriebsbefehls steuert.

4. Das Fernüberwachungssystem (3) nach einem der vorhergehenden Ansprüche, wobei der Signalempfänger (30) mit einem Chipsatz (21) des lokalen Computers (2) verbunden ist;
wobei die Fernsteuerung (31) so konfiguriert ist, dass sie eine Anzeigefreigabebenachrichtigung über den Signalempfänger (30) an den Chipsatz (21) sendet, wenn sie eine Fernschaltanforderung von dem Entfernten Computer (41) empfängt, so dass der Prozessor (20) das erste Videosignal an den Signalempfänger (30) liefert.

5. Das Fernüberwachungssystem (3) nach einem der vorhergehenden Ansprüche,
wobei, wenn eine Fernsteuerung beendet wird, die Fernsteuerung (31) so konfiguriert ist, dass sie eine Benachrichtigung zum Deaktivieren der Anzeige an einen/den Chipsatz (21) sendet, so dass der Chipsatz (21) den Prozessor (20) benachrichtigt, die Bereitstellung des ersten Videosignals an den Signalempfänger (30) durch eine Hot-Plugging-Steuerung (200) zu beenden.

6. Das Fernsteuerungsüberwachungssystem (3) nach einem der vorhergehenden Ansprüche, wobei der Signalempfänger (30) so konfiguriert ist, dass er ein neues erstes Videosignal, das einem neuen lokalen Anzeigebildschirm entspricht, vom Prozessor (20) empfängt, wenn der Signalempfänger (30) feststellt, dass eine Auffrischungsbedingung erfüllt ist, und eine Videostandardtransformation an dem neuen ersten Videosignal ausführt, um ein neues zweites Videosignal zu erzeugen;
die Fernsteuerung (31) so konfiguriert ist, dass sie eine Streaming-Transformation an dem neuen zweiten Videosignal ausführt, um neue Videodaten zu erzeugen, wenn die Auffrischungsbedingung erfüllt ist, und die neuen Videodaten über das Netzwerkmodul (22) an den entfernten Computer (41) überträgt, um einen neuen fernen Anzeigebildschirm entsprechend dem neuen lokalen Anzeigebildschirm anzuzeigen.

7. Das Fernsteuerungsüberwachungssystem (3) nach einem der vorhergehenden Ansprüche, ferner umfassend: ein Basis-Eingabe/Ausgabe-System (BIOS) (32), wobei das BIOS (32) so konfiguriert ist, dass es den ersten Videosignalanschluss (500-503) und den zweiten Videosignalanschluss (500-503), die mit dem Prozessor (20) verbunden sind, auf den Spiegelanzeigemodus einstellt, wenn das BIOS (32) in dem lokalen Computer (2) installiert und zur Ausführung während des Bootens des lokalen Computers (2) geladen wird.

8. Das Fernsteuerungsüberwachungssystem (3) nach einem der vorangehenden Ansprüche, ferner umfassend: einen Hochgeschwindigkeits-Hub (6), wobei der Hochgeschwindigkeits-Hub (6) mindestens eine Eingangsschnittstelle und eine Vielzahl von Ausgabeschnittstellen umfasst, die Eingangsschnittstelle mit dem Signalempfänger (30) verbunden ist, zwei der Ausgabeschnittstellen jeweils mit der Fernsteuerung (31) und einem Anzeigeanschluss (520-522) des lokalen Computers (2) verbunden sind;
wobei der Hochgeschwindigkeits-Hub (6) so konfiguriert ist, dass er das von dem Signalempfänger (30) empfangene zweite Videosignal an die Fernsteuerung (31) und den Anzeigeanschluss (520-522) sendet.

9. Ein Computersystem mit einer Fernüberwachungsfunktion, das Folgendes umfasst
**dadurch gekennzeichnet**:
das Fernüberwachungssystem (3) nach einem der vorhergehenden Ansprüche;
das Netzwerkmodul (22), das mit dem Fernsteuerungsüberwachungssystem (3) verbunden und so konfiguriert ist, dass es den entfernten Computer (41) über das Netzwerk (40) verbindet und vom Fernsteuerungsüberwachungssystem (3) empfangene Videodaten an den entfernten Computer (41) überträgt; und
die lokale Anzeige (23), die so konfiguriert ist, dass sie den lokalen Anzeigebildschirm anzeigt.

10. Das Fernsteuerungsüberwachungsverfahren, das verwendet wird, um einen lokalen Anzeigebildschirm, der von einem lokalen Computer (2) erzeugt wird, einem entfernten Computer (41) in Echtzeit zur Verfügung zu stellen, um eine entfernte Echtzeitanzeige zu implementieren, wobei der lokale Computer (2) einen Signalempfänger (30), eine Fernsteuerung (31), einen Prozessor (20), ein Netzwerkmodul (22), eine lokale Anzeige (23) und einen Anzeigeadapter (512) umfasst, wobei das Fernsteuerungsüberwachungsverfahren die folgenden Schritte umfasst:
**dadurch gekennzeichnet**:
a) Übertragen eines ersten Videosignals über einen ersten Videosignalanschluss (502) des Prozessors (20) an den Anzeigeadapter (512), der mit der lokalen Anzeige (23) verbunden ist, wobei der Prozessor (20) den ersten Videosignalanschluss (502), der mit dem Anzeigeadapter (512) verbunden ist, und einen zweiten Videosignalanschluss (503), der mit dem Signalempfänger (30) verbunden ist, umfasst, und der erste Videosignalanschluss (502) und der zweite Videosignalanschluss (503) so eingestellt sind, dass sie einen Spiegelanzeigemodus bilden, um das erste Videosignal mit demselben Inhalt zu übertragen;
b) Empfangen des ersten Videosignals, das dem lokalen Anzeigebildschirm entspricht, durch den Signalempfänger (30) über eine Art von Eingangsschnittstellen des Signalempfängers (30) von dem zweiten Videosignalanschluss (503) des Prozessors (20), Umwandeln des ersten Videosignals in ein zweites Videosignal und Ausgeben des zweiten Videosignals in einem Videostandard, der sich von dem Videostandard des ersten Videosignals unterscheidet, über eine Art der Ausgabeschnittstellen des Signalempfängers (30);
c) Übertragen des zweiten Videosignals durch die Fernsteuerung (31) über das Netzwerkmodul (22) an den entfernten Computer (41); und
d) Anzeigen eines entfernten Anzeigebildschirms, der den lokalen Anzeigebildschirm auf einer entfernten Anzeige (42) spiegelt, basierend auf dem zweiten Videosignal.

11. Das Fernüberwachungsverfahren nach Ansprüche 10 umfasst ferner die folgenden Schritte:
e1) durch die Fernsteuerung (31), Abrufen einer Statusinformation eines Peripheriegeräts (24) durch einen Chipsatz (21) und Übertragen der Statusinformation an den Entfernten Computer (41); und
e2) Steuern des Peripheriegeräts (24) entsprechend einem Betriebsbefehl durch den Chipsatz (21) auf der Grundlage des von dem entfernten Computer (41) gesendeten Betriebsbefehls.

12. Das Fernüberwachungsverfahren nach einem der vorhergehenden Ansprüche, das vor dem Schritt a) die folgenden Schritte umfasst:
f1) Senden einer Anzeigefreigabemeldung durch die Fernsteuerung (31) über den Signalempfänger (30) an einen/den Chipsatz (21), wenn eine Fernschaltanforderung von dem entfernten Computer (41) empfangen wird; und
f2) durch den Chipsatz (21), benachrichtigten eines Hot-Plugging-Controllers (200) des Prozessors (20), damit der Prozessor (20) das erste Videosignal an den Signalempfänger (30) liefert.

13. Fernüberwachungsverfahren nach einem der vorhergehenden Ansprüche, das vor dem Schritt f1) den folgenden Schritt umfasst:
g) Empfangen von Anmeldedaten über das Netzwerkmodul (22) von dem entfernten Computer (41) durch die Fernsteuerung (31) und Ausführen einer Authentifizierung der Anmeldedaten;
wobei der Schritt f1) das Empfang der Fernschaltanforderung umfasst, wenn die Anmeldedaten verifiziert sind.
wobei das Fernsteuerungsüberwachungsverfahren die folgenden Schritte umfasst:
h1) durch die Fernsteuerung (31), Senden einer Benachrichtigung über das Deaktivieren der Anzeige durch den Signalempfänger (30) an den Chipsatz (21), wenn ein Beenden der Fernsteuerung erkannt wird; und
h2) durch den Chipsatz (21), Benachritigen des Prozessors (20) die Bereitstellung des ersten Videosignals an den Signalempfänger (30) zu beenden;
wobei das Fernsteuerungsüberwachungsverfahren einen Schritt i) umfasst, wenn eine Auffrischungsbedingung erfüllt ist, Ausführen des Schritts b) bis zum Schritt d), um neue Videodaten an den entfernten Computer (41) zu übertragen, um einen neuen fernen Anzeigebildschirm entsprechend eines neuen lokalen Anzeigebildschirm anzuzeigen.

14. Das Fernüberwachungsverfahren nach einem der vorangehenden Ansprüche umfasst ferner die folgenden Schritte vor dem Schritt a):
j1) Laden eines Basis-Eingabe/Ausgabe-Systems (BIOS) (32), wenn der lokale Computer (2) hochgefahren wird; und
j2) durch das BIOS (32), Setzen des ersten Videosignalanschluss (500-503) und des zweiten Videosignalanschluss (500-503), die mit dem Prozessor (20) verbunden sind, auf den Spiegelanzeigemodus.

## Revendications

1. Un système de surveillance à distance (3) utilisé pour fournir un écran d'affichage local en temps réel à un ordinateur distant (41) afin de mettre en oeuvre un affichage en temps réel à distance, le système de surveillance à distance (3) comprenant :
**caractérisé en ce que**
un adaptateur d'affichage (512) connecté à un affichage local (23) ;
un processeur (20) comprenant une première borne de signal vidéo (502) et une deuxième borne de signal vidéo (503), la première borne de signal vidéo (502) étant connectée à l'adaptateur d'affichage (512)
un récepteur de signal (30) comprenant une pluralité de types d'interfaces d'entrée pour un premier standard vidéo et une pluralité de types d'interfaces de sortie pour un second standard vidéo, le récepteur de signal (30) étant connecté au second port de signal vidéo (503) du processeur (20) d'un ordinateur local (2) et étant configuré pour recevoir un premier signal vidéo , correspondant à l'écran d'affichage local, à partir du second port de signal vidéo (503) par l'intermédiaire d'un type des interfaces d'entrée , à convertir le premier signal vidéo en un second signal vidéo, et à activer un type des interfaces de sortie pour délivrer le second signal vidéo dans une norme vidéo différente de la norme vidéo du premier signal vidéo ; dans lequel le premier port de signal vidéo (502) et le second port de signal vidéo (503) sont réglés pour former un mode d'affichage miroir afin de transmettre le premier signal vidéo avec le même contenu ; et
un contrôleur à distance (31) connecté au récepteur de signal (30) et configuré pour transmettre le second signal vidéo à l'ordinateur distant (41) via un module de réseau (22) de sorte qu'un écran d'affichage distant correspondant à l'écran d'affichage local est affiché sur la base du second signal vidéo ;
dans lequel le premier signal vidéo est compatible avec une norme de sortie du processeur (20) ; le second signal vidéo est compatible avec une norme d'entrée de la télécommande (31) .

2. Le système de surveillance à distance (3) selon la revendication 1, dans lequel la commande à distance (31) est connectée au module de réseau (22) via une interface de bande latérale de contrôleur de réseau (NCSI).

3. Le système de surveillance à distance (3) selon l'une des revendications précédentes, dans lequel le contrôleur à distance (31) est connecté à un jeu de puces (21) et est connecté à une pluralité de périphériques (24) de l'ordinateur local (2) via le jeu de puces (21), le contrôleur à distance (31) est configuré pour , pour obtenir des informations d'état de chaque périphérique (24) par l'intermédiaire du jeu de puces (21) et pour transmettre les informations d'état à l'ordinateur distant (41), ou pour commander le périphérique (24) conformément à une commande de fonctionnement par l'intermédiaire du jeu de puces (21) sur la base de la commande de fonctionnement envoyée par l'ordinateur distant (41).

4. Le système de surveillance à distance (3) selon l'une des revendications précédentes, dans lequel le récepteur de signaux (30) est connecté à un jeu de puces (21) de l'ordinateur local (2) ;
dans lequel le contrôleur à distance (31) est configuré pour envoyer une notification de libération d'affichage au jeu de puces (21) par l'intermédiaire du récepteur de signal (30) lorsqu'il reçoit une demande de commutation à distance de l'ordinateur distant (41), de sorte que le processeur (20) fournit le premier signal vidéo au récepteur de signal (30).

5. Le système de télésurveillance (3) selon l'une des revendications précédentes,
dans lequel, lorsqu'une commande à distance est terminée, la commande à distance (31) est configurée pour envoyer une notification de désactivation de l'affichage à un/des jeu(x) de puces (21), de sorte que le jeu de puces (21) notifie au processeur (20) de terminer la fourniture du premier signal vidéo au récepteur de signal (30) par une commande de branchement à chaud (200).

6. Le système de surveillance à distance (3) selon l'une des revendications précédentes, dans lequel le récepteur de signaux (30) est configuré pour recevoir un nouveau premier signal vidéo correspondant à un nouvel écran d'affichage local en provenance du processeur (20) lorsque le récepteur de signaux (30) détermine qu'une condition de rafraîchissement est satisfaite, et pour effectuer une transformation vidéo standard sur le nouveau premier signal vidéo afin de générer un nouveau deuxième signal vidéo ;
le contrôleur à distance (31) est configuré pour effectuer une transformation de diffusion en continu sur le nouveau second signal vidéo afin de générer de nouvelles données vidéo lorsque la condition de rafraîchissement est satisfaite, et pour transmettre les nouvelles données vidéo à l'ordinateur distant (41) via le module de réseau (22) afin d'afficher un nouvel écran d'affichage distant correspondant au nouvel écran d'affichage local.

7. Le système de surveillance à distance (3) selon l'une quelconque des revendications précédentes, comprenant en outre : un système d'entrée/sortie (BIOS) de base (32), dans lequel le BIOS (32) est configuré pour régler le premier port de signal vidéo (500-503) et le second port de signal vidéo (500-503) connectés au processeur (20) sur le mode d'affichage miroir lorsque le BIOS (32) est installé dans l'ordinateur local (2) et chargé pour une exécution pendant le démarrage de l'ordinateur local (2).

8. Le système de surveillance de télécommande (3) selon l'une quelconque des revendications précédentes, comprenant en outre : un concentrateur à grande vitesse (6), ledit concentrateur à grande vitesse (6) comprenant au moins une interface d'entrée et une pluralité d'interfaces de sortie, ladite interface d'entrée étant connectée audit récepteur de signaux (30), deux desdites interfaces de sortie étant respectivement connectées à ladite télécommande (31) et à un port d'affichage (520-522) dudit ordinateur local (2) ;
dans lequel le concentrateur à grande vitesse (6) est configuré pour envoyer le deuxième signal vidéo reçu du récepteur de signal (30) à la télécommande (31) et au port d'affichage (520-522).

9. Un système informatique doté d'une fonction de contrôle à distance comprenant
**caractérisé en ce que**
le système de télésurveillance (3) selon l'une des revendications précédentes ;
le module de réseau (22) connecté au système de surveillance à distance (3) et configuré pour connecter l'ordinateur distant (41) via le réseau (40) et pour transmettre les données vidéo reçues du système de surveillance à distance (3) à l'ordinateur distant (41) ; et
l'écran local (23), configuré pour afficher l'écran d'affichage local.

10. Le procédé de surveillance à distance utilisé pour fournir un écran d'affichage local généré par un ordinateur local (2) à un ordinateur distant (41) en temps réel pour mettre en oeuvre un affichage en temps réel distant, l'ordinateur local (2) comprenant un récepteur de signal (30), une commande à distance (31), un processeur (20), un module de réseau (22), un affichage local (23) et un adaptateur d'affichage (512), le procédé de surveillance à distance comprenant les étapes suivantes :
**caractérisé en ce que**
a) transmettre un premier signal vidéo par l'intermédiaire d'un premier port de signal vidéo (502) du processeur (20) à l'adaptateur d'affichage (512) connecté à l'affichage local (23), dans lequel le processeur (20) comprend le premier port de signal vidéo (502) connecté à l'adaptateur d'affichage (512), et un deuxième port de signal vidéo (503) connecté au récepteur de signal (30), et le premier port de signal vidéo (502) et le deuxième port de signal vidéo (503) sont réglés pour former un mode d'affichage miroir afin de transmettre le premier signal vidéo avec le même contenu ;
b) la réception du premier signal vidéo correspondant à l'écran d'affichage local par le récepteur de signaux (30) par l'intermédiaire d'un type d'interfaces d'entrée du récepteur de signaux (30) à partir de la seconde borne de signal vidéo (503) du processeur (20), la conversion du premier signal vidéo en un second signal vidéo et la sortie du second signal vidéo dans une norme vidéo différente de la norme vidéo du premier signal vidéo par l'intermédiaire d'un type d'interfaces de sortie du récepteur de signaux (30) ;
c) la transmission du deuxième signal vidéo par la télécommande (31) à l'ordinateur distant (41) via le module de réseau (22) ; et
d) l'affichage d'un écran d'affichage distant qui reflète l'écran d'affichage local sur un affichage distant (42), sur la base du second signal vidéo.

11. Le procédé de télésurveillance selon les revendications 10 comprend en outre les étapes suivantes :
e1) par la commande à distance (31), récupérer une information d'état d'un dispositif périphérique (24) par un jeu de puces (21) et transmettre l'information d'état à l'ordinateur distant (41) ; et
e2) commander le périphérique (24) selon une instruction de fonctionnement par le jeu de puces (21) sur la base de l'instruction de fonctionnement envoyée par l'ordinateur distant (41).

12. Le procédé de télésurveillance selon l'une des revendications précédentes, qui comprend, avant l'étape a), les étapes suivantes :
f1) l'envoi par la télécommande (31) d'un message de validation d'affichage à un/des jeu(x) de puces (21) via le récepteur de signaux (30) lorsqu'une demande de commutation à distance est reçue de l'ordinateur distant (41) ; et
f2) par le jeu de puces (21), notifier un contrôleur de branchement à chaud (200) du processeur (20) pour que le processeur (20) fournisse le premier signal vidéo au récepteur de signal (30).

13. Procédé de télésurveillance selon l'une quelconque des revendications précédentes, comprenant, avant l'étape f1), l'étape suivante :
g) recevoir, par l'intermédiaire du module de réseau (22), des données de connexion provenant de l'ordinateur distant (41) par l'intermédiaire de la commande à distance (31) et effectuer une authentification des données de connexion ;
dans lequel l'étape f1) comprend la réception de la demande de commutation à distance lorsque les données de connexion sont vérifiées.
dans lequel le procédé de surveillance à distance comprend les étapes suivantes :
h1) par la télécommande (31), envoyer une notification de désactivation de l'affichage par le récepteur de signaux (30) au jeu de puces (21) lorsqu'un arrêt de la télécommande est détecté ; et
h2) par le jeu de puces (21), avertir le processeur (20) de terminer la fourniture du premier signal vidéo au récepteur de signal (30) ;
dans lequel le procédé de surveillance à distance comprend une étape i), lorsqu'une condition de rafraîchissement est satisfaite, l'exécution de l'étape b) jusqu'à l'étape d) pour transmettre de nouvelles données vidéo à l'ordinateur distant (41) afin d'afficher un nouvel écran d'affichage distant correspondant à un nouvel écran d'affichage local.

14. Le procédé de télésurveillance selon l'une quelconque des revendications précédentes comprend en outre les étapes suivantes avant l'étape a) :
j1) charger un système d'entrée/sortie de base (BIOS) (32) lorsque l'ordinateur local (2) est démarré ; et
j2) par le BIOS (32), le réglage du premier port de signal vidéo (500-503) et du second port de signal vidéo (500-503) connectés au processeur (20) en mode d'affichage miroir.
